# EUROPEAN PATENT APPLICATION

(11) **EP 2 119 490 A1**
(43) Date of publication of application: **18.11.2009**
(21) Application number: 09075223.9
(22) Date of filing: 11.05.2009
(51) Int. Cl.: B01D 53/75, B01D 53/38, B01D 53/32, C02F 1/72

(54) **System for air pollution abatement**

(30) Priority: 17.05.2008 IT RM20080244
(71) Applicant: Tripodi, Paolo, 00175 Roma (IT); TRIPODI, Mauro, 00175 Roma (IT)
(72) Inventor: Tripodi, Paolo, 00175 Roma (IT); TRIPODI, Mauro, 00175 Roma (IT)
(74) Representative: Riccardi, Sergio

(57) **Abstract**

A system for air pollution abatement is described, comprising a first stage for liquid abatement of heavy metals, dust, pollen and polycyclic aromatic hydrocarbons, in particulate form, a second stage for oxidation of light hydrocarbons in water by using oxygen from electrolysis, and a third stage for chemical transformation of CO₂ into bicarbonates by reaction with inorganic carbonates. The system may be used for abatement of pollutants emitted in terrestrial and marine industrial systems, in the urban, suburban and rural areas and in any closed or open environment where air pollution is present. The system requires simple, easily available and economic mechanical, electrical components and reacting materials, and may be assembled in containers of limited dimensions.

## Description

### Field of the invention

The present invention refers to a physical and chemical system for abatement of gaseous, liquid and solid air pollutants named APA (Air Pollution Abatement). The APA system comprises three stages: the first stage is used for humid abatement of hydrocarbons in particulate form like C₁₀H₈, C₁₂H₁₀, C₁₄H₁₀, C₁₆H₁₀, C₁₇H₁₂, C₁₈H₁₀, C₁₈H₁₂₃ C₂₀H₁₂, C₂₂H₁₄, etc., heavy metals, dust and pollen; the second stage is used for electrolytic oxidation of light hydrocarbons like CH₄ and C₄H₁₀ (more general CₙH₂ₙ₊₂ and CₙH₂ₙ), sequestration of metals and dissociation of inorganic compounds like NOₓ and SOₓ; the third stage is used for chemical transformation of CO₂ in form of bicarbonates.

### Background of invention

Atmospheric pollution of our planet, mainly due to CO, CO₂, hydrocarbons, NOₓ, SOₓ, metals and other compounds, is a serious problem requiring a fast solution in the near future. The main sources of atmospheric pollution are three: industry, transport and civil, with about the same contribution to the environmental pollution.

At this time not so strong effort have been done to decrease the environmental pollution produced by industrial plants and nothing have been done to decrease the pollution produced by transport and civil human activity.

Methodologies for air pollution abatement are well known and deeply studied, and are mainly based on molecular absorption or chemical transformation. The strategy of these methods and systems application goes in the direction to solve the in-situ industrial emission, with very expensive up-grade of the industrial plants and affecting only the 30% of total pollution source.

The object of the present invention is a system for the air pollution abatement (APA) that is distributed with very low environmental impact, especially suitable inside the urban area and economically convenient.

### Summary of the invention

The mentioned problem of air pollution may be solved by the APA system of the present disclosure. APA system is a three stage process to clean the air from pollution. The first stage is used for dust, pollen, heavy metals and polycyclic aromatic hydrocarbons abatement. The second stage is used to bum paraffin, olefin, sequestration of metals and dissociation of inorganic compounds. The third stage is used for chemical transformation of CO₂ and CO using carbonates chemical reactions.

In the first stage, the polycyclic aromatic hydrocarbons are captured in humid with a double step scrubber: a first atomizer step and a second disks step.

In the second stage, paraffin and olefin hydrocarbons are burned in water using high reacting oxygen from electrolysis as in the following reactions:

*CH*₄ + 2*O*₂ → *CO*₂ + 2*H*₂*O*

*C*₂*H*₄ + 3*O*₂ → 2*CO*₂ + 2*H*₂*O*

*C*₃*H*₈ + 5O₂ → 3*CO*₂ + 4*H*₂*O*

2*C*₃*H*₆ + 9*O*₂ → 6*CO*₂ + 6*H*₂*O*

2*C*₄*H*₁₀ + 13*O*₂ → 8*CO*₂ + 10*H*₂*O*

*C*₄*H*₈ + 6*O*₂ → 4*CO*₂ + 4*H*₂*O*

The carbon dioxide produced is processed in the next stage.

The third stage is based on a simple chemical transformation well known since the last century and used in industrial process to produce chemical substances like for instance:

*CaCO*₃ + *CO*₂ + *H*₂O → *Ca*(*HCO*₃)₂

starting from a very abundant compound i.e. calcium carbonate (CaCO₃) in aqueous solution (H₂O) and adding carbon dioxide (CO₂); what is produced is calcium bicarbonate (Ca(CO₃)₂) more water soluble than calcium carbonate.

To stabilize the CO₂ transformation process (because the calcium bicarbonate is transformed in calcium carbonate when CO₂ concentration is low or the temperature is greater than 75°C), the calcium bicarbonate is transformed in more stable sodium bicarbonate using one of the following reactions:

*Ca*(*HCO*₃)₂₊ 2*NaOH* → 2*NaHCO*₃ + *Ca*(*OH*)₂

*Ca*(*HCO*₃)₂ + *Na*⁺*zeolite* → 2*NaHCO*₃ + *Ca*⁺⁺*zeolite*

The system of the present invention will now be described in its presently preferred embodiment with reference to the accompanying illustrative drawings, in which:
Fig. 1 is a schematic view of the system first stage;
Fig. 2 is a schematic view of the system second stage;
Fig. 3 is a schematic view of the system third stage; and
Fig. 4 is a general view of the system layout.

### System first stage (A)

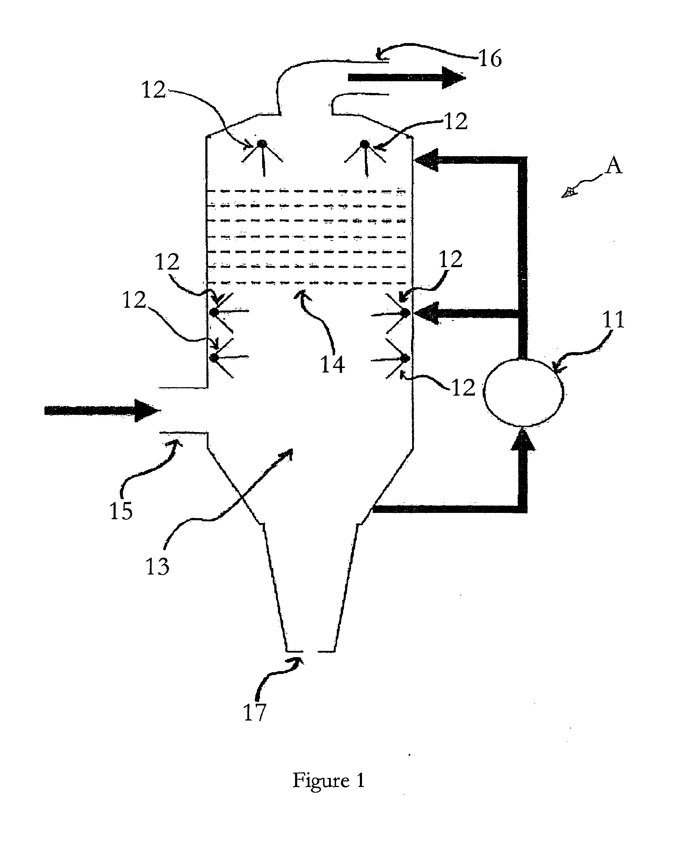

Figure 1 describes the first stage of the system APA operating as a scrubber. A pumping device (11) is present to supply liquid to the atomizer (12) and the top of vessel (13). Several disks (14) are present. There are the input tube (15) and output tube (16) for air. A tank to recover the pollution is connected to the bottom exit (17). The air is forced to the input tube (15), pass through atomized liquid in the vessel (13) then pass through the disks (14) in counter flux to the liquid injected in the vessel by the top atomizer. Then the air exit by the output tube (16). The atomized liquid is generally water, possibly with the addition of acidic or basic salts to regulate the pH value as required by the local conditions such as the composition of the water supply and/or of the pollutants to be abated.

### System second stage (B)

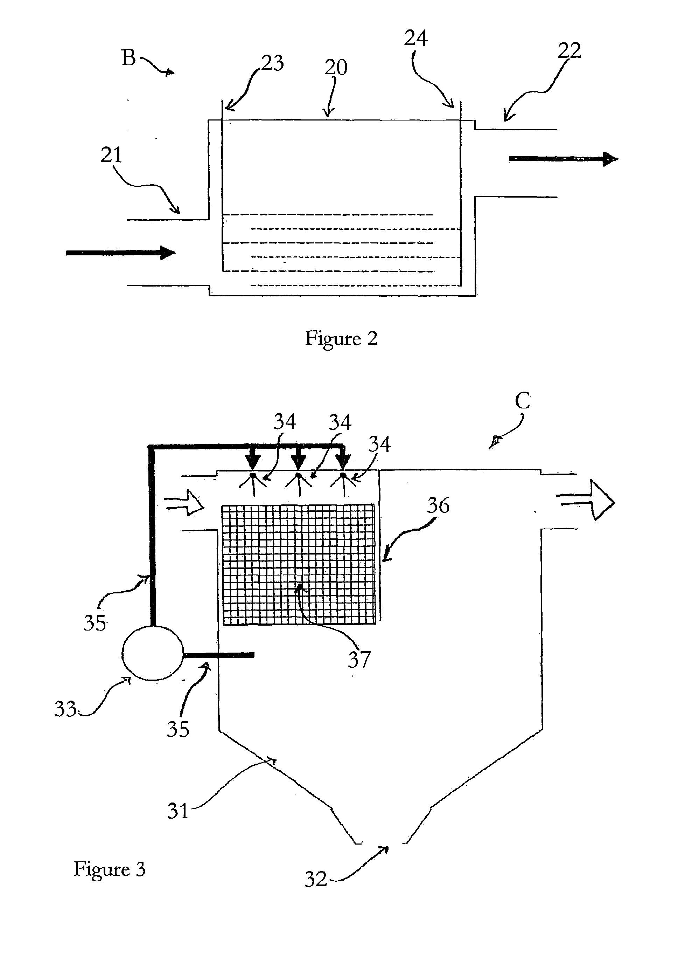

Figure 2 describes the second stage of the system APA. There is a vessel (20) where electrodes (23, 24) are immersed in electrolytic liquid and powered by electricity to obtain an electric current flowing through the electrodes. There are the input (21) and output (22) tube. The air escaping by the first stage arrives at the second stage, passes through the electrochemical cell and escape from the output tube (22).

### System third stage (C)

Figure 3 describes the third stage of the system APA. There is a double vessel (31) where is present a separation wall (36) to divide the mineralization side (37) from the rest. A circulating water system (35) is present with a pump (33) that forces water in the atomizer (34). The mineralization system (37) contains reacting material and has a mesh wall able to release the bicarbonate produced. A suitable size of the mesh holes is less than 1mm. The air is forced into the double vessel and then goes out purified into the environment. A collector (32) for the bicarbonate is connected to the bottom of double vessel (31). Suitable reacting materials may be selected from the group of inorganic carbonates such as calcium, magnesium, potassium, sodium, strontium, barium carbonate. The grain size of the carbonate may have a mean diameter dimension in the range of 10µ ≤ diameter ≤ 3cm.

### System layout

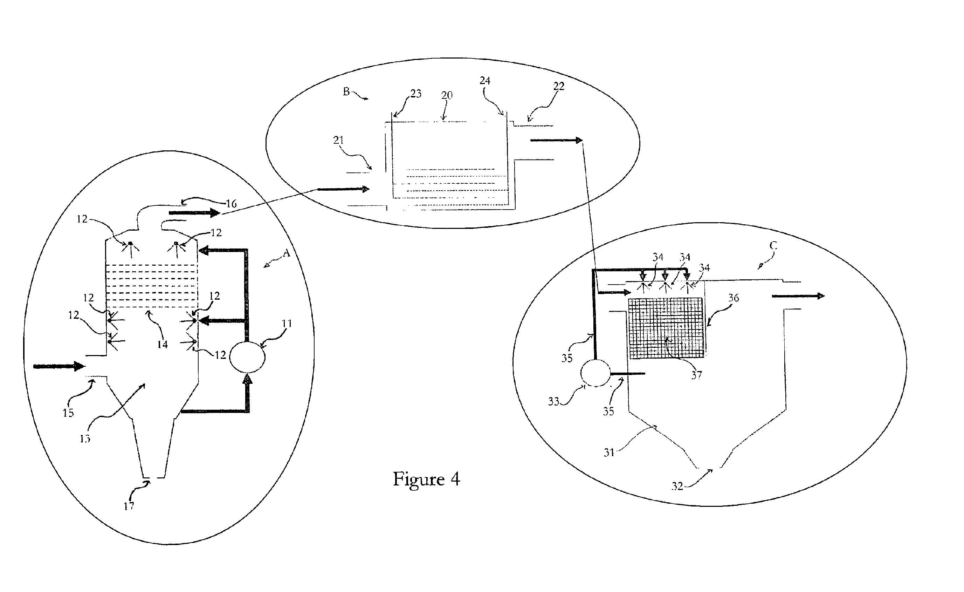

Figure 4 describes the complete APA system for sequestration of pollutant present in the atmosphere. The first stage (A) is a humid scrubber with a double abatement system, atomizer first and then disks. Second stage (B) where hydrocarbons are oxidized in water using electrochemical system. The third stage (C), which is the mineralization stage where CO, CO₂ bicarbonate transformation occurs.

### Industrial applicability

Applications of the APA system are numerous, treatment of industrial plant emissions, treatment of urban air, treatment of air in working place or in house. All this versatility is due to the modularity of the APA system. The most important application is the sequestration of CO₂ and hydrocarbons (gaseous or dust) in the urban area, where it is possible to create a network of APA system to clean the urban air. An apparatus comprising the three stages of the system, as outlined in Figure 4, may be assembled in a suitable container in the form of a box of limited dimensions (about 2 cubic meters). As the systems requires very simple mechanical and electric components and easily available reacting materials (water, carbonates) the manufacturing, assembling and installation costs are sustainable.

Just to give a physical example of the possible use in a medium size town, it has been calculated that installation of one system every 50-100 m along the streets would clean air of the town even in the worst environmental conditions, and a pilot project is being finalized in a suburban section of Rome, Italy.

Although the system of the present invention has been described as comprising three stages or modules, it has to be pointed out that in case of need and in view of its versatility and modularity, the system could be implemented with any possible combination of two of said three stages, or even with only one of said stages, when the remaining stage or stages can be considered unnecessary.

## Claims

1. A system for air pollution abatement (APA) comprising a first stage for abatement of heavy metals, dust, pollen and polycyclic aromatic hydrocarbons in particulate form, a second stage for electrolytic oxidation of light hydrocarbons, sequestration of metals and dissociation of inorganic compounds, and a third stage for chemical transformation of CO₂ and CO into bicarbonates by reaction with inorganic carbonates.

2. The system of claim 1, wherein the first stage comprises a humid scrubber comprising a first phase of atomizing liquid to the polluted air forced into said stage, and then a second phase of air passage through disks in counterflow to the liquid pumped in the scrubber.

3. The system of claim 2, wherein said first stage comprises an equipment to fill the liquid provided with sensors checking the liquid level and a tank collecting the sludge settled in the scrubber bottom.

4. The system of claim 1, wherein the second stage comprises an electrochemical cell with air inlet and outlet manifolds, and anode and cathode multifilament electrodes.

5. The system of claim 4, wherein the electrolyte is liquid and the cell is provided with liquid level sensors and electrolyte refilling valves.

6. The system of claim 1, wherein the third stage comprises a mineralization cell of CO₂ and CO provided with forced air input and output manifolds, atomizers for reaction water forced by a circulation pump and a mineralization section containing the reacting materials and provided with a filter for discharge of the bicarbonate obtained by the reaction and collected at the cell bottom.

7. The system according to claim 6, wherein the reacting material is contained in a filtering mesh with geometry and size adapted to let the produced bicarbonate pass to the collector at the bottom of the cell.

8. The system of claim 7, wherein the size of holes of the filtering mesh is less than 1mm.

9. The system according to the preceding claims wherein the reacting material is selected from the group of inorganic carbonates such as calcium carbonate, magnesium carbonate, potassium carbonate, sodium carbonate, barium carbonate, strontium carbonate.

10. The system according to claim 9, wherein the carbonate grain has a mean diameter dimension in the range of [10µm≤diameter≤3cm].

11. The system according to the preceding claims, wherein the pollutant gas flow has a flux Φ in the range [Φ≥100L/h].

12. The system according to the preceding claims, wherein pressure, temperature, water solution level, gas flow monitoring systems are present.

13. Use of APA system, according to the preceding claims for abatement of pollutants emitted in terrestrial and marine industrial systems.

14. Use of APA system, according to claims 1 to 12 for abatement of polluting emissions in the urban, suburban, rural areas and in any closed or open space or environment where air pollution is present.
